# EUROPÄISCHE PATENTSCHRIFT

(11) **EP 2 208 015 B1**
(45) Veröffentlichungstag und Bekanntmachung des Hinweises auf die Patenterteilung: **19.01.2011**
(21) Anmeldenummer: 08846763.4
(22) Anmeldetag: 29.10.2008
(51) Int. Cl.: G01B 11/03, G01B 5/012

(54) **MESSKOPFSYSTEM FÜR EINE KOORDINATENMESSMASCHINE UND VERFAHREN ZUM OPTISCHEN MESSEN VON VERSCHIEBUNGEN EINES TASTELEMENTS DES MESSKOPFSYSTEMS**
MEASURING HEAD SYSTEM FOR A COORDINATE MEASURING MACHINE AND METHOD FOR THE OPTICAL MEASUREMENT OF DISPLACEMENTS OF A SCANNING ELEMENT OF THE MEASURING HEAD SYSTEM
SYSTÈME DE TÊTE DE MESURE POUR UNE MACHINE DE MESURE DE COORDONNÉES ET PROCÉDÉ DE MESURE OPTIQUE DE DÉPLACEMENTS D'UNE SONDE DU SYSTÈME DE TÊTE DE MESURE

(30) Priorität: 05.11.2007 EP 07119973
(43) Veröffentlichungstag der Anmeldung: 21.07.2010
(73) Patentinhaber: Leica Geosystems AG, 9435 Heerbrugg (CH)
(72) Erfinder: SIERCKS, Knut, CH-9402 Mörschwil (CH); LIPPUNER, Heinz, CH-9445 Rebstein (CH); SCHWITTER, Ursula, CH-9470 Buchs (CH); FREI, Stefan, CH-9443 Widnau (CH); WUSK, Baptiste, CH-9320 Arbon (CH); KEFERSTEIN, Claus P., CH-9470 Werdenberg (CH)
(74) Vertreter: Kaminski Harmann
(86) Internationale Anmeldenummer: PCT/EP2008/064642
(87) Internationale Veröffentlichungsnummer: WO 2009/059916

(56) Entgegenhaltungen:
- WO-A-2005/085749
- DD-A- 125 296
- DE-A1- 2 741 413
- DE-A1- 4 409 360
- GB-A- 2 150 282
- US-A- 5 048 194

## Beschreibung

Die Erfindung betrifft ein Messkopfsystem für eine Koordinatenmessmaschine mit einem mechanischen Tastelement nach dem Oberbegriff des Anspruchs 1 und ein Verfahren zum optischen Messen von Verschiebungen eines Tastelements des Messkopfsystems nach dem Oberbegriff des Anspruchs 14.

Messkopfsysteme für Koordinatenmessmaschinen mit einem mechanischen Tastelement werden seit vielen Jahren zum exakten Vermessen einer Oberfläche eines Messobjekts verwendet. Ein gattungsgemäßes Messkopfsystem, auch Tastkopf genannt, für ein entsprechendes Koordinatenmessgerät ist z.B. aus EP 0 373 644 Al bekannt.

Beispielsweise wird damit die Objektform von maschinell hergestellten Werkstücken zur Qualitätskontrolle überprüft. Für den Messvorgang wird der Messkopf des Koordinatenmessgeräts mit einem Verschiebegestell soweit an das Messobjekt herangefahren, bis ein relativ zu einer Messkopfbasis des Messkopfes beweglich gelagertes Tastelement, insbesondere ein Taststift, einen gewünschten Messpunkt am Messobjekt berührt. Anschließend kann aus der Stellung des Messkopfes und der relativen Lage des Tastelements zur Messkopfbasis die Raumkoordinate des angetasteten Messpunktes bestimmt werden.

Um die relative Lage des Taststiftes zur Messkopfbasis, mit anderen Worten also die Auslenkung des Taststiftes beim Antasten des Messobjekts, zu bestimmen, sind verschiedene Verfahren bekannt.

Bei dem Messkopfsystem aus der eingangs genannten EP 0 373 644 Al wird zu diesem Zweck ein optischer Detektor verwendet. Dieser beinhaltet zwei Lichtsender, die zwei diagonal aufeinander zulaufende Lichtstrahlen erzeugen, sowie ein zweidimensionales PSD (Position Sensitive Device) als Lichtempfänger. Wenn sich der Taststift in seiner nicht ausgelenkten Ruhelage befindet, erzeugen die beiden Lichtstrahlen einen gemeinsamen Lichtpunkt in der Mitte des PSD. Wird der Taststift ausgelenkt, erzeugen die beiden Lichtstrahlen jeweils einen Lichtpunkt auf dem PSD, wobei die zwei Lichtpunkte abhängig von der Größe und Richtung der Auslenkung auf dem PSD wandern. Das PSD erzeugt abhängig von der Lage der Lichtpunkte zwei Ausgangsströme, mit deren Hilfe die Lage der Lichtpunkte auf dem PSD bestimmt werden kann. Aus den erhaltenen Werten lässt sich dann die Größe und Richtung der Taststiftauslenkung bestimmen. Aufgrund der besonderen Art der Anordnung der Lichtsender können in diesem Fall Auslenkungen des Taststiftes in allen drei Koordinatenrichtungen (x, y, z) erfasst werden.

Ein anderer Messkopf mit optischer Erfassung der Taststiftauslenkungen ist aus WO 00/60307 bekannt. Auch in diesem Fall kommt ein zweidimensional messendes, photosensitives Detektorelement zum Einsatz. Die genaue Art der Auswertung ist dieser Druckschrift jedoch nicht zu entnehmen.

Aus DE 38 26 581 Al ist ein dreidimensional messender Messkopf bekannt, bei dem ein erstes optisches Detektorelement für die Auslenkungen des Taststiftes in x-bzw. y-Richtung und ein zweites, räumlich getrenntes, optisches Detektorelement zum Erfassen von Auslenkungen in z-Richtung verwendet wird.

Aus DE 27 41 413 Al ist ferner ein zweidimensional messender Messkopf bekannt, bei dem die Auslenkung des Taststiftes in x- und y-Richtung aus der Lage eines Lichtpunktes auf einem zweidimensionalen Feld von Photozellen bestimmt wird. Das Detektorfeld ist dazu in vier Quadranten unterteilt und die Lage des Lichtpunktes in einem oder mehreren der Quadranten ist ein Maß für die Auslenkung des Taststiftes.

Die Veröffentlichung WO 2005/085749 offenbart einen Messkopf mit einem Taststift, dessen Auslenkung in lateraler und vertikaler Richtung durch Erzeugen eines kreisförmigen Lichtbildes auf mindestens zwei räumlich getrennt und zueinander versetzt angeordneten Zeilensensoren ausgelesen wird. Die mindestens zwei, vorzugsweise vier ein Sensorkreuz bildenden Zeilensensoren werden dabei gemeinsam und gleichzeitig von der einen Lichtfigur beleuchtet. Des Weiteren ist beschrieben, dass es sich bei Zeilensensoren um Messelemente für jeweils nur eine Dimension handele.

Im Dokument DD 125 296 A wird in einem Messkopf einer Koordinatenmessmaschine die Auslenkung des kontaktierenden Teils relativ zur Basis des Messkopfs in x- und y-Richtung gemessen. Hierzu werden pro Achse jeweils vier fotoelektrische Wandler mittels eines Kreuzgitters von einer Lichtquelle beleuchtet wodurch eine x- bzw. y-abhängige Projektion auf den fotoelektrischen Wandlern erzeugt wird. Dabei sind zwei, in der jeweiligen Achsrichtung verlaufende, unterbrochene Reihen von jeweils vier einzelnen fotoelektrischen Wandlern angeordnet.

Bei sämtlichen obig beschriebenen Messkopfsystemen aus dem Stand der Technik ist ein Auslesen von flächigen Sensoren oder mehreren Zeilensensoren zwingend notwendig, was sich hinsichtlich der Auslesegeschwindigkeit und somit auch der Messgeschwindigkeit als sehr nachteilig erweist.

Darüber hinaus gibt es eine Vielzahl von Messköpfen, bei denen die Auslenkungen des Taststiftes nicht auf optischem Wege, sondern mit anderen Detektoren, beispielsweise Tauchspulen oder Hallelementen, erfasst werden.

Die bekannten Messkopfsysteme haben jeweils für sich individuelle Stärken und Schwächen in Bezug auf die maximal erreichbare Messgenauigkeit, die maximale Messgeschwindigkeit und den maximal möglichen Messbereich und darüber hinaus in Bezug auf Größe und Gewicht des Messkopfes, Robustheit und Herstellungsaufwand. Keines der bekannten Messkopfsysteme erfüllt jedoch alle Anforderungen in gleicher Weise.

Vor diesem Hintergrund ist es eine allgemeine Aufgabe der vorliegenden Erfindung, ein verbessertes Messkopfsystem mit optischen Messkomponenten und ein verbessertes optisches Messverfahren für eine Koordinatenmessmaschine bereitzustellen.

Eine spezifische Aufgabe der Erfindung ist das Bereitstellen eines hinsichtlich der Auslesegeschwindigkeit und somit der Messgeschwindigkeit verbesserten Messkopfsystems und optisch-elektronischen Messverfahrens.

Eine weitere spezifische Aufgabe der Erfindung ist das Bereitstellen eines Messkopfsystems mit weniger komplexen optischen Messkomponenten, die insbesondere einen geringeren Platzbedarf aufweisen und dabei eine gleich bleibende oder verbesserte Messgenauigkeit gewährleisten.

Diese Aufgaben werden durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Ein erfindungsgemässes Messkopfsystem für eine Koordinatenmaschine weist einen zum Kontaktieren eines Messobjekts vorgesehenen Teil an einem Tastelement auf, der im Allgemeinen relativ zu einer Messkopfbasis in einer lateralen x-Richtung und einer lateralen y-Richtung, sowie im Speziellen zusätzlich in einer vertikalen z-Richtung, bewegbar ist und sich somit zum mechanischen Abtasten des Messobjekts eignet.

Dazu kann das Messkopfsystem in bereits bekannter Weise mehrere Bewegungsabschnitte aufweisen, durch welche das Tastelement mit der Messkopfbasis verbunden ist. Die Bewegungsabschnitte sind dabei so miteinander und mit der Messkopfbasis verbunden, dass zwischen jeweils zwei Bewegungsabschnitten bzw. zwischen Messkopfbasis und dem daran angebrachten Bewegungsabschnitt eine geführte Verschiebung jeweils in x-, y- sowie gegebenenfalls z-Richtung ausgeführt werden kann. Dadurch wird eine in diese Richtungen geführte Bewegbarkeit des Tastelements relativ zur Messkopfbasis gewährleistet, wodurch das Tastelement - bis auf rotatorische Bewegungen und bis zu einer bestimmten Auslenkung von einer Nullstellung - frei bewegbar ist.

Erfindungsgemäss werden zum exakten optisch-elektronischen Messen von Verschiebungen des kontaktierenden Teils am Tastelement relativ zur Messkopfbasis Mittel mit mindestens einer Strahlungsquelle und mindestens einem erstem Maskenelement zur Erzeugung einer ersten Teilprojektion auf einer an der Messkopfbasis angeordneten Sensor-Zeile verwendet. Das erste Maskenelement ist dabei derartig ausgebildet, dass die erste Teilprojektion zum Bestimmen von lateralen Verschiebungen des kontaktierenden Teils des Tastelements in x- und y-Richtung optimiert ist.

Aus den nur durch die eine Sensor-Zeile erzeugten Signalen kann die Auswerteeinheit entsprechend die x- und y-Verschiebung bestimmen.

Zur zusätzlichen Bestimmung einer Verschiebung des kontaktierenden Teils einer vertikalen z-Richtung können die Mittel des Weiteren ein sich vom ersten Maskenelement unterscheidendes zweites Maskenelement aufweisen. Das zweite Maskenelement ist derart zur Erzeugung von einer zweiten Teilprojektion auf der Sensor-Zeile ausgebildet, dass die zweite Teilprojektion zur Bestimmung mindestens einer z-Verschiebung in der z-Richtung des kontaktierenden Teils relativ zur Messkopfbasis optimiert ist.

In diesem Fall ist die Auswerteeinheit zur Bestimmung der x-, der y-, und der z-Verschiebung aus nur durch die eine Sensor-Zeile erzeugten Signalen ausgebildet.

Die Sensor-Zeile als Teil eines optischen Sensors besteht dabei aus einer Vielzahl von fortlaufend und im Wesentlichen immterbrochen aneinander gereihten Sensorelementen, sodass die darauf erzeugte Projektion - aus erster sowie gegebenenfalls zweiter Teilprojektion - auslesbar ist. Bevorzugt handelt es sich bei dem optischen Sensor um einen Zeilensensor mit einer einzigen Sensor-Zeile, da eine einzelne Zeile erheblich schneller auslesbar ist als mehrere Zeilen oder gar flächige Sensoren. Beispielsweise kommen dafür - wie nach dem Stand der Technik bekannt - CCD-Lineararrays oder Zeilensensoren in CMOS-Technologie in Frage. Allerdings können alternativ auch flächige, zweidimensionale Sensoren verwendet werden, bei welchen nur eine einzige Zeile zur Messung der Verschiebungen ausgelesen wird. Der Sensor ist vorzugsweise so an der Messkopfbasis angebracht, dass die Sensor-Zeile - oder genauer ausgedrückt die Längsachse der Sensor-Zeile - in x-Richtung ausgerichtet ist. Die Längsachse der Sensor-Zeile ist dabei als jene Achse definiert, die parallel zur Aneinanderreihungsrichtung der einzelnen Sensorelemente verläuft.

Des Weiteren ist als Sensor-Zeile eine fortlaufende, im Wesentlichen ununterbrochene Aneinanderreihung von Sensorelementen zu verstehen, sodass sich eine zusammenhängende Zeile in einer insbesondere geraden Linie ergibt. Zwar können die einzelnen linear gereihten Sensorelemente mit minimalem Abstand nebeneinander angeordnet sein. Funktional bildet die Sensor-Zeile derart eine fortlaufende Linie, dass ein zusammenhängender Abschnitt der Projektion erfassbar ist und somit der Verlauf der auf der Sensor-Zeile erzeugten Projektion ohne Unterbrechung ausgewertet werden kann. Aus dem einen einzigen ausgelesenen zusammenhängenden linearen Abschnitt der Projektion werden die x- und y-Verschiebungen - sowie gegebenenfalls ebenso die z-Verschiebung - bestimmt.

Die Mittel zur Erzeugung der Projektion, also die mindestens eine Strahlungsquelle und die Maskenelemente, sind dabei vorzugsweise räumlich fix mit dem Tastkopf verbunden, sodass diese alle Verschiebungen des Tastkopfes zusammen mit dem Tastkopf ausführen und somit die auf die Sensor-Zeile erzeugte Projektion von der relativen Lage des Tastkopfes zur Messkopfbasis abhängt. Insbesondere kann jedoch auch ein Maskenelement zusammen mit der dieses beleuchtenden Strahlungsquelle an einem Bewegungsabschnitt des Messkopfsystems angebracht sein, der in nur einer oder in nur zwei der drei Richtungen bewegbar ist. Dieses Maskenelement ermöglicht dann speziell nur das Bestimmen von Auslenkungen des Tastkopfes in der einen bzw. den zwei Richtungen. Beispielsweise kann dies bewusst zur Eliminierung einer Verwechslungsgefahr von durch die jeweiligen Verschiebungen in die drei Richtungen bewirkten, unterschiedlichen Änderungen der Teilprojektionen eingesetzt werden, worauf im Weiteren näher eingegangen wird.

Gemäss der Erfindung können die mindestens zwei sich unterscheidenden Teilprojektionen räumlich oder zeitlich voneinander getrennt werden, sodass diese bei der Auslesung der Sensor-Zeile voneinander unterschieden werden können. Beispielsweise können die beiden Teilprojektionen nebeneinander auf jeweils eine Hälfte der Sensor-Zeile projiziert werden oder alternativ zeitlich abwechselnd auf der gleichen Sensor-Zeile oder einem gleichen Bereich derselben erzeugt werden. Ausserdem können die Teilprojektionen auch räumlich und zeitlich voneinander getrennt auf der Sensor-Zeile erzeugt werden.

Ebenso möglich ist auch ein ineinander verschränktes Abbilden der beiden Teilprojektionen auf der Sensor-Zeile, sodass die beiden Teilprojektionen beispielsweise anhand des auf der Sensor-Zeile erzeugten Musters unterschieden und somit getrennt für die Bestimmung der lateralen bzw. vertikalen Verschiebung ausgewertet werden können.

Wie bereits oben erwähnt kann - durch das erfindungsgemässe Erzeugen von zwei Teilprojektionen auf nur eine einzige Sensor-Zeile und Auslesen dieser einzigen Sensor-Zeile - ein hinsichtlich der Auslesegeschwindigkeit verbessertes Messkopfsystem bereitgestellt werden, wobei dennoch Verschiebungen in alle drei Richtungen, in welche der kontaktierende Teil des Tastelements bewegbar ist, mit gleicher oder gar verbesserter Messgenauigkeit bestimmt werden können. Dies wird durch das Erzeugen von Teilprojektionen erreicht, die für ein Bestimmen speziell der lateralen Verschiebungen bzw. speziell der vertikalen Verschiebung ausgelegt sind.

Die erste, für die Bestimmung von lateralen Verschiebungen optimierte Teilprojektion, welche durch das erste Maskenelement erzeugt wird, weist ein derartiges Muster auf, dass sowohl eine x- als auch eine y-Verschiebung jeweils eindeutig identifizierbar und auslesbar sind. Die erste Teilprojektion ist also insofern zur Bestimmung von lateraler Verschiebungen ausgelegt, dass auch bei einer Auslenkung des kontaktierenden Teils entlang allen drei Richtungen unverwechselbar Änderungen der ersten Teilprojektion auf der Sensor-Zeile als eine durch die x-Verschiebung begründete Änderung bzw. als eine durch die y-Verschiebung begründete Änderung erkennbar sind.

Das erste Maskenelement kann insbesondere derart ausgebildet sein, dass die x-Verschiebung des kontaktierenden Teils des Tastelements eine definierte Bewegung der ersten Teilprojektion entlang der Sensor-Zeile bewirkt. Somit kann ein Ausmass der x-Verschiebung anhand einer Verrückung der gesamten ersten Teilprojektion entlang der Sensor-Zeile ermittelt werden. Zusätzlich wird aus der durch das erste Maskenelement erzeugten ersten Teilprojektion die y-Verschiebung bestimmt. Dafür ist das Maskenelement beispielsweise zusätzlich derart ausgebildet, dass eine y-Verschiebung eine definierte Verhältnismässigkeitsänderung der auf die Sensor-Zeile abgebildeten ersten Teilprojektion bewirkt. Unter Verhältnismässigkeitsänderung ist dabei eine definierte Änderung von Verhältnismässigkeiten des auf der Zeile erzeugten Musters zu verstehen.

Als einfaches Beispiel können dabei drei auf der Zeile durch die Teilprojektion erzeugte Lichtpunkte herangezogen werden, wobei durch den Abstand von erstem zu zweitem Lichtpunkt eine Strecke a und durch den Abstand von erstem zu drittem Punkt eine Strecke b definiert wird. Bei einer y-Verschiebung ändert sich nun die auf der Sensor-Zeile erzeugte erste Teilprojektion - d.h. die Anordnung der Lichtpunkte auf der Sensor-Zeile - derart, dass sich je nach Ausmass der y-Verschiebung das Verhältnis der Strecke a zur Strecke b definiert verändert. Eine solche Verhältnismässigkeitsänderung kann nun eindeutig als durch die y-Verschiebung verursachte Änderung der ersten Teilprojektion identifiziert werden. In einer weiteren Ausführung kann allerdings auch lediglich eine definierte Änderung der Strecke a zur Bestimmung des Ausmasses der y-Verschiebung herangezogen werden.

Konkret kann beispielsweise das erstes Maskenelement derart zur Erzeugung der für die Bestimmung von lateralen Verschiebungen ausgelegten ersten Teilprojektion ausgebildet sein, dass die erste Teilprojektion ein Muster mit zwei senkrecht zur Sensor-Zeile ausgerichteten Linien und einer dritten schräg zur Sensor-Zeile ausgerichteten Linie aufweist. Ebenso kann die erste Teilprojektion z.B. auch eine V-förmige Struktur aufweisen.

Die Optimierung der durch das zweite Maskenelement erzeugten zweiten Teilprojektion für das Bestimmen der vertikalen Verschiebungen erfolgt hinsichtlich einer eindeutigen Identifizierbarkeit und exakten Auslesbarkeit von durch die z-Verschiebung bewirkten Änderungen der zweiten Teilprojektion. Die zweite Teilprojektion ist also insofern zur Bestimmung der vertikalen Verschiebung ausgelegt, dass auch bei einer Auslenkung des kontaktierenden Teils entlang allen drei Richtungen unverwechselbar eine spezifische Änderung der zweiten Teilprojektion auf der Sensor-Zeile als eine durch die z-Verschiebung begründete und definierte Änderung erkennbar ist.

Das zweite Maskenelement ist insbesondere derart ausgebildet, dass die z-Verschiebung des kontaktierenden Teils eine definierte Skalierungsänderung der zweiten Teilprojektion auf der Sensor-Zeile bewirkt. Unter Skalierungsänderung ist dabei ein Vergrössern bzw. ein Verkleinern der gesamten zweiten Teilprojektion zu verstehen, d.h. sämtliche Verhältnisse innerhalb der Teilprojektion bzw. des Teilprojektionsmusters auf der Sensor-Zeile bleiben unverändert, wohingegen die Grössenskala der gesamten zweiten Teilprojektion verändert wird.

Konkret kann dafür beispielsweise das zweite Maskenelement derart ausgebildet sein, dass die zweite Teilprojektion ein Muster mit mehreren senkrecht zur Sensor-Zeile ausgerichteten Linien, die nebeneinander angeordnet sind, aufweist.

Da eine x-Verschiebung eine genauer auflösbare Änderung der ersten Teilprojektion bewirkt als eine y-Verschiebung, kann die x-Verschiebung auch mit höherer Genauigkeit bestimmt werden. Um y-Verschiebungen dennoch mit den erforderlichen Genauigkeiten ermitteln zu können, kann die zweite Teilprojektion beispielsweise zusätzlich zur Bestimmung der y-Verschiebung optimiert sein, sodass eine aus erster und zweiter Teilprojektion bestimmte y-Verschiebung gemittelt und somit genauer bestimmt werden kann. Dafür wird das zweite Maskenelement derart ausgebildet, dass zusätzlich die y-Verschiebung eine definierte Verhältnismässigkeitsänderung der zweiten Teilprojektion auf der Sensor-Zeile bewirkt und die y-Verschiebung auch eindeutig anhand dieser Verhältnismässigkeitsänderung der zweiten Teilprojektion identifizierbar ist.

Dabei können insbesondere das zweite Maskenelement sowie die diese beleuchtende Strahlungsquelle zur Erzeugung der zweiten Teilprojektion räumlich fix an jenem Bewegungsabschnitt des Messkopfsystems angebracht sein, der relativ zur Messkopfbasis nur in y- und z-Richtung bewegbar ist. Somit können von vornherein Änderungen der zweiten Teilprojektion, die durch Auslenkungen des kontaktierenden Teils am Tastelement in x-Richtung bewirkt werden, ausgeschlossen werden, wodurch eine Verwechslungsgefahr mit den eigentlich zu messenden Änderungen, die durch Verschiebungen in y- bzw. z-Richtung bewirkt werden, verschwindet.

Die mindestens zwei Maskenelemente können zum Beispiel auf einer gemeinsamen Maske realisiert sein, insbesondere wenn die mindestens zwei Teilprojektionen ineinander verschränkt realisiert werden.

Alternativ können die Maskenelemente auch jeweils auf einer eigenen Maske realisiert sein, wobei dann mehrere Strahlungsquellen oder Umlenkmittel zum Beleuchten der Masken verwendet werden.

Als Maskenelemente sind jegliche nach dem Stand der Technik bekannten Mittel einsetzbar, die sich zur Erzeugung der obig beschriebenen Teilprojektionen eignen. Z.B. können die Maskenelemente dafür lichtundurchlässige und lichtdurchlässige Bereiche aufweisen, wodurch eine Schattenprojektion als einfaches Beispiel einer Teilprojektion erzeugbar ist.

Wie aus dem Stand der Technik bekannt können eine oder mehrere zusätzliche Optiken zur Erzeugung der Teilprojektionen auf der Sensor-Zeile angeordnet sein, wobei dafür sämtliche bekannte Arten von Optiken, wie diffraktive, refraktive oder reflektierende, Verwendung finden können. Insbesondere ist im Strahlgang nach den Maskenelementen, beispielsweise zum scharfen und/oder vergrösserten Abbilden des Maskenelementmusters auf der Sensor-Zeile, eine mikroskopobjektivartige Linsenkombination angeordnet. Dabei kann aus Gründen einer weniger aufwändigen Montage ein fixes Anbringen dieser Linsenkombination an der Messkopfbasis, d.h. am nicht beweglichen Teil des Messkopfsystems, von Vorteil sein, wobei alternativ auch ein Anbringen am Tastelement - den Maskenelementen nachgeordnet - möglich ist.

Des Weiteren können beim Auslesen der Sensor-Zeile sämtliche dem Fachmann bekannte Interpolationsverfahren angewendet werden.

Ein erfindungsgemässes Messkopfsystem ist insbesondere für Koordinatenmessmaschinen geeignet, bei welchen das Messkopfsystem auf beweglichen Armen oder einem Verschiebungsgestell der Koordinatenmessmaschine montiert ist und dabei Mittel zum Bestimmen einer relativen Raumposition des Messkopfsystems bezüglich eines inneren Koordinatensystems vorhanden sind.

Die Erfindung wird nachfolgend anhand von in den Zeichnungen schematisch dargestellten Ausführungsbeispielen rein beispielhaft näher beschrieben, wobei auch auf weitere Vorteile eingegangen wird. Im einzelnen zeigen
- Fig. 1: ein Ausführungsbeispiel eines erfindungsgemässen Messkopfsystems für eine Koordinatenmess- maschine;
- Fig. 2a-b: eine schematische Darstellung von zwei Ausführungsbeispielen eines erfindungsgemässen Messkopfsystems;
- Fig. 3: ein schematisch dargestelltes Ausführungsbeispiel zur Erzeugung einer Schattenwurfprojektion auf der Sensor-Zeile;
- Fig. 4a-d: Ausführungsbeispiele für jeweils das erste und das zweite Maskenelement;
- Fig. 5: eine durch die in Figur 4a gezeigte Maske erzeugte Projektion aus zwei ineinander verschränkten Teilprojektionen auf der Sensor- Zeile;
- Fig. 6a-b: weitere schematisch dargestellte Ausführungsbeispiele zur Erzeugung der Teilprojektionen;
- Fig. 7: ein weiteres schematisch dargestelltes Ausführungsbeispiel zur Erzeugung der Teilprojektionen auf der Sensor-Zeile; und
- Fig. 8a-b: ein weiteres schematisch dargestelltes Ausführungsbeispiel zur Erzeugung der Teilprojektionen auf der Sensor-Zeile.

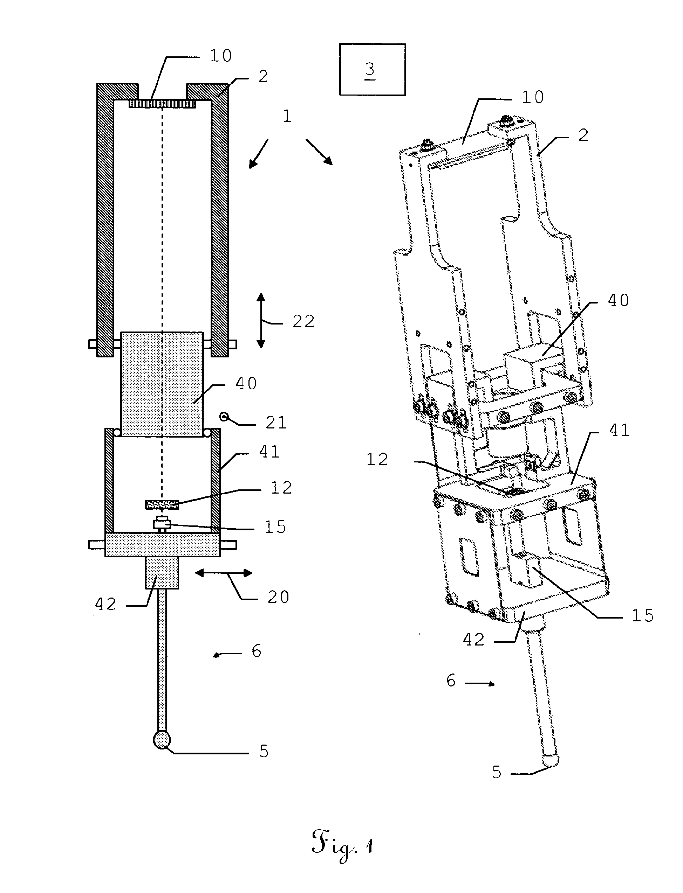

Figur 1 zeigt ein Messkopfsystem 1 für eine Koordinatenmessmaschine in einer schemenhaften Schnittdarstellung und einer räumlichen Schrägsichtdarstellung. Der Aufbau gattungsgemässer Messkopfsysteme mit einem Tastelement ist bereits aus dem Stand der Technik bekannt. Der kontaktierende Teil 5 eines als Taststift ausgebildeten Tastelements 6 zum Abtasten eines Messobjekts ist dabei relativ zu einer Messkopfbasis 2, die beispielsweise an einem Arm einer Koordinatenmessmaschine fix angebracht ist, in drei zueinander senkrechten Raumrichtungen 20,21,22 beweglich. Dazu ist das Tastelement 6 über drei hier schematisch dargestellte Bewegungsabschnitte 40,41,42, welche eine geführte Bewegung jeweils in eine Raumrichtung 20,21,22 ermöglichen, an der Tastkopfbasis 2 aufgehängt.

Wie durch die Pfeile 20,21,22 als Veranschaulichung der gewährleisteten Bewegungsfreiheit angedeutet, wird beispielsweise durch die Aufhängung des ersten Bewegungsabschnitts 40 an der Messkopfbasis eine geführte Bewegung in z-Richtung 22, durch die Aufhängung des zweiten Bewegungsabschnitts 41 am ersten Bewegungsabschnitt eine geführte Bewegung in y-Richtung 21 und durch die Aufhängung des dritten Bewegungsabschnitts 42 am zweiten Bewegungsabschnitt eine geführte Bewegung in x-Richtung 20 ermöglicht. Das Tastelement 6 ist fest am dritten Bewegungsabschnitt 42 montiert oder stellt selbst den dritten Bewegungsabschnitt 42 dar, wodurch das hier schematisch dargestellte Messkopfsystem 1 nun in der Lage ist, Verschiebungen bzw. Auslenkungen in allen drei Raumrichtungen x, y, z auszuführen.

Die Art der Aufhängung spielt allerdings für die Realisierung der vorliegenden Erfindung nur eine untergeordnete Rolle. Die Aufhängungen können beispielsweise durch Federaufhängungen (Membranfedern, Federparallelogramme, Doppelfederparallelogramme) oder Linearführungen (Gleitlager, Rollenlager oder Ähnliches) realisiert sein, wie dies den einschlägigen Fachleuten bekannt ist. Die Messkopfbasis 2 kann beispielsweise das Gehäuse des Messkopfsystems 1 oder ein mit diesem verbundenes Teil sein.

An der Messkopfbasis 2 ist ein optischer Sensor 10 mit einer auslesbaren Sensor-Zeile aus einer Vielzahl von aneinander gereihten Sensorelementen fixiert. Die Längsachse der Sensor-Zeile ist dabei parallel zur x-Richtung 20 ausgerichtet.

Räumlich fix zum Tastelement 6 sind Mittel zur Erzeugung einer von Verschiebungen des kontaktierenden Teils 5 des Tastelements 6 relativ zur Messkopfbasis 2 abhängigen Projektion auf der Sensor-Zeile angeordnet. Dazu weisen die Mittel eine Strahlungsquelle 15, beispielsweise eine LED oder eine Laserdiode, und eine der Strahlungsquelle 15 nachgeordnete Maske 12 auf. Die Maske 12 weist dabei erfindungsgemäss ein erstes Maskenelement und ein sich davon unterscheidendes zweites Maskenelement auf, die derart zur Erzeugung von mindestens einer ersten bzw. einer zweiten Teilprojektion auf der Sensor-Zeile ausgebildet sind, dass die erste Teilprojektion zur Bestimmung einer x- und einer y-Verschiebung in der x- bzw. y-Richtung 20,21 und die zweite Teilprojektion zur Bestimmung mindestens einer z-Verschiebung in der z-Richtung 22 des kontaktierenden Teils 5 relativ zur Messkopfbasis 2 optimiert sind.

Das Messkopfsystem 1 weist dabei eine Auswerteeinheit 3 zur Bestimmung der x-, der y-, und der z-Verschiebung aus nur durch die eine Sensor-Zeile erzeugten Signalen auf. D.h., durch ein Auslesen der nur einen einzigen Sensor-Zeile können nun die Verschiebungen des Tastelements 6 bzw. des kontaktierenden Teils 5 jeweils in die drei Raumrichtungen x, y, z bestimmt werden, wodurch erfindungsgemäss Vorteile hinsichtlich der Auslesegeschwindigkeit und somit der Messgeschwindigkeit erzielt werden können. Da mindestens zwei sich unterscheidende und jeweils speziell optimierte Maskenelemente verwendet werden, können die Auslenkungen des Tastelements 6 trotz der enorm schnellen Auslesegeschwindigkeit mit gattungsgemäss geforderten Genauigkeiten oder sogar gegenüber dem Stand der Technik verbesserten Genauigkeiten ermittelt werden.

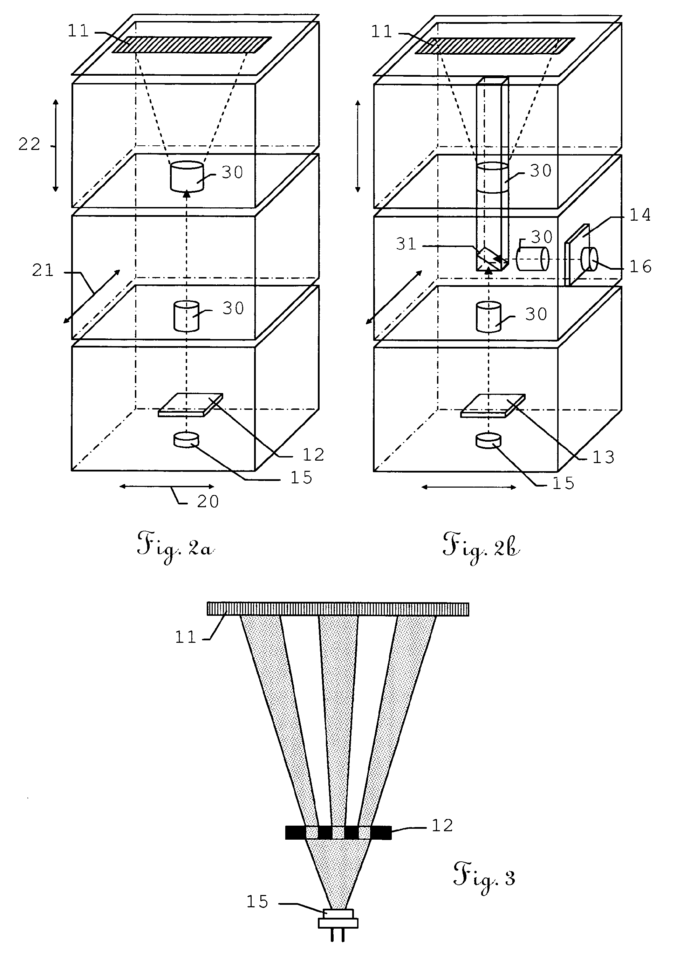

Figur 2a zeigt schematisch ein erfindungsgemässes Messkopfsystem 1 mit drei als Quader dargestellten Bewegungsteilen, die - gemäss der Beschreibung zu Figur 1 - die geführten Verschiebungen jeweils in eine Raumrichtung 20,21,22 ermöglichen.

Am untersten Bewegungsteil ist ein hier der Einfachheit halber nicht dargestelltes Tastelement befestigt. Ebenso ist daran eine Strahlungsquelle 15 mit einer nachgeordneten Maske 12 angebracht, die zur Erzeugung der zwei von der relativen Lage des Tastelements abhängigen Teilprojektionen ausgebildet sind. Im Strahlgang nach der Maske 12, die zwei Maskenelemente aufweist, ist zum scharfen und vergrössernden Abbilden der Maskenelementemuster auf der Sensor-Zeile 11 eine mikroskopobjektivartige Linsenkombination 30 angeordnet. Diese Linsenkombination 30 ist dabei fix an der Messkopfbasis montiert.

In Figur 2b ist ein Ausführungsbeispiel mit zu Figur 2a alternativer Anordnung der Mittel zur Erzeugung der Teilprojektionen dargestellt.

Dabei sind eine erste Strahlungsquelle 15 und die nachgeordnete Maske 13 mit einem ersten Maskenelement fix an dem dritten Bewegungsabschnitt angebracht. Der dritte Bewegungsabschnitt ist - entsprechend der Beschreibung zu Figur 1 - gegenüber der Messkopfbasis in alle drei Raumrichtungen x, y, z bewegbar. Das erste Maskenelement ist derartig optimiert, dass die dadurch erzeugte erste Teilprojektion zur Bestimmung einer x- und einer y-Verschiebung ausgelegt ist. Dazu weist das Maskenelement ein Muster auf, sodass aus der auf der Sensor-Zeile 11 erzeugten ersten Teilprojektion unverwechselbar jeweils separat eine x- und eine y- Verschiebung identifizierbar und Ausmasse dieser Verschiebungen auslesbar sind.

Am zweiten Bewegungsabschnitt, der relativ zur Messkopfbasis nur in y- und z-Richtung beweglich ist, sind eine zweite Strahlungsquelle 16 und eine nachgeordnete weitere Maske 14 mit einem zweiten Maskenelement fix angebracht. Wird der kontaktierende Teil des Tastelements nun in alle Raumrichtungen x, y, z ausgelenkt, so führt der zweite Bewegungsabschnitt dennoch nur die Auslenkungen in y- und z-Richtung mit aus. Die durch die zweite Strahlungsquelle 16 und das zweite Maskenelement erzeugte zweite Teilprojektion ändert sich also bei einer reinen x-Auslenkung des kontaktierenden Teils nicht. Daher ist das zweite Maskenelement speziell derart ausgebildet, dass die zweite Teilprojektion zur Bestimmung der y- und der z-Verschiebung optimiert ist. Ein Verwechseln einer durch eine x-Verschiebung bewirkten Änderung der zweiten Teilprojektion auf der Sensor-Zeile mit einer durch eine y- oder z-Verschiebung bewirkten Änderung kann also von vornherein ausgeschlossen werden.

Die erste und die zweite Teilprojektion werden in diesem Ausführungsbeispiel zeitlich getrennt und abwechselnd auf der Sensor-Zeile 11 erzeugt. Beispielsweise anhand eines definierten Abwechslungsrhythmus können dabei die beiden Teilprojektionen jeweils beim Auslesen unterschieden und identifiziert werden. Dazu ist ein Prisma 31 zum zusammenführen der Strahlgänge der ersten und der zweiten Teilprojektion vor oder zwischen einer scharf abbildenden Linsenkombination 30 angeordnet.

Da sowohl die erste als auch die zweite Teilprojektion zum Auslesen der y-Verschiebung ausgelegt ist, kann zur Bestimmung der y-Verschiebung beispielsweise ein Mittelwert aus den aus der ersten bzw. der zweiten Teilprojektion ermittelten y-Verschiebungswerten gebildet werden.

Figur 3 illustriert schematisch ein bekanntes und geeignetes Beispiel für die Erzeugung einer auslesbaren Projektion auf einer Sensor-Zeile 11. Nach dem Schattenwurfprinzip wird hierfür eine Maske 12 mit ein Muster bildenden, lichtdurchläsigen und lichtundurchlässigen Bereichen von einer Strahlungsquelle 15 beleuchtet und somit ein Teil des durch das Muster geformten Schattenwurfs auf die Sensor-Zeile 11 projiziert.

Je nach relativer Lage des Detektors zur Strahlungsquelle 15 und Maske 12 wird ein entsprechender Teil des Schattenwurfs auf der Sensor-Zeile 11 abgebildet, woraus auf die momentane relative Lage geschlossen werden kann.

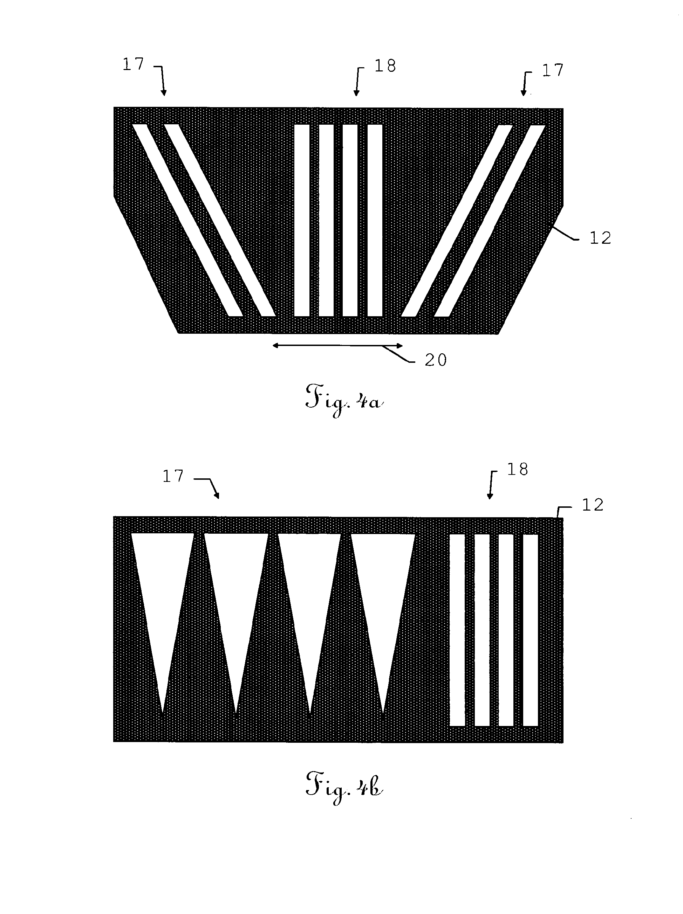

Figuren 4a bis 4d zeigen Ausführungsbeispiele für die jeweils zur Bestimmung entweder lateraler oder vertikaler Verschiebungen optimierter Maskenelemente 17,18. Dabei ist jeweils eine Anbringung der Sensor-Zeile parallel zur x-Richtung 20 vorgesehen.

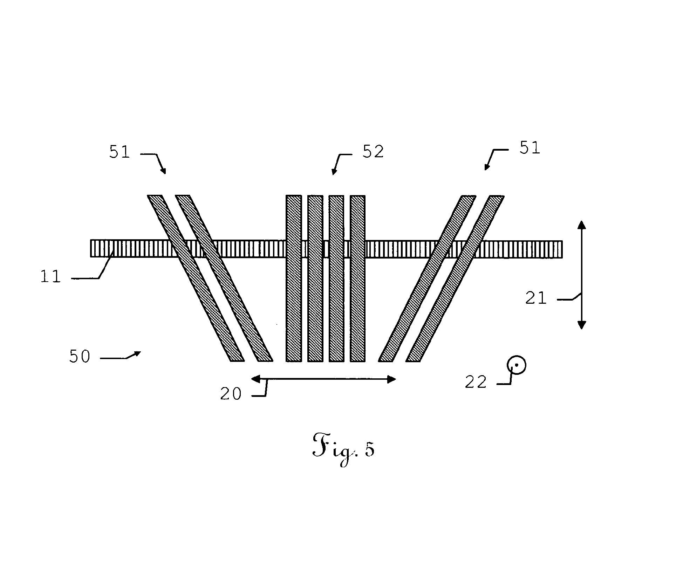

In Figur 4a sind das erste und das zweite Maskenelement 17,18 auf einer gemeinsamen Maske 12, die durch eine Strahlungsquelle beleuchtet werden kann, realisiert. Das erste Maskenelement 17 weist ein Muster aus jeweils zwei zueinander parallelen, schräg zur x-Richtung 20 ausgerichteten Linien und somit in gewisser Weise eine V-Form auf, wohingegen das zweite Maskenelement 18 vier zueinander parallele, senkrecht zur x-Richtung 20 angeordnete Linien aufweist. Die erste und zweite Teilprojektion werden durch diese Maske 12 also ineinander verschränkt erzeugt. Dabei zeigt Figur 5 eine durch die hier dargestellte Maske 12 erzeugte Projektion 50 auf die Sensor-Zeile 11. Wie dabei ersichtlich ist, entstehen durch die Projektion 50 acht Lichtpunkte auf der Sensor-Zeile 11, wobei die zwei linken äusseren und die zwei rechten äusseren Lichtpunkte durch die erste Teilprojektion 51 und die inneren vier Lichtpunkte durch die zweite Teilprojektion 52 entstehen.

Verschiebt sich die beleuchtete Maske in z-Richtung 22, so kann das Ausmass dieser Verschiebung eindeutig und mit Verschiebungen in anderen Richtungen unverwechselbar an den jeweiligen Abständen der vier durch die parallelen Linien erzeugten Lichtpunkte des zweiten Maskenelements bestimmt werden. Das zweite Maskenelement ist also zum Bestimmen der z-Verschiebung optimiert.

Eine Verschiebung der Maske in x-Richtung 20 bewirkt eine Verschiebung der Projektion 50 entlang der Sensor-Zeile 11, welche beispielsweise eindeutig aus der Lage eines Streckenmittelpunktes der Strecke von äusserstem linken zu äusserstem rechten Lichtpunkt bestimmt werden kann. Das Bestimmen der y-Verschiebung kann beispielsweise eindeutig und unverwechselbar anhand eines definierten Verhältnisses der Strecke bzw. des Abstands von äusserstem linken zu äusserstem rechten Lichtpunkt relativ zum Abstand der beiden äusseren linken Lichtpunkte erfolgen. Das erste Maskenelement, durch welches die äusseren beiden linken und äusseren beiden rechten Lichtpunkte erzeugt werden, ist somit zur Bestimmung von lateralen Verschiebungen optimiert.

Sollen nur x- und y-Verschiebungen aus der auf der Zeile erzeugten Projektion 50 ausgelesen werden, so kann zur Bestimmung der y-Verschiebung auch ein Abstand von dem Schwerpunkt der beiden linken bzw. rechten Lichtpunkte zum Gesamtschwerpunkt der Lichtfigur 50 herangezogen werden.

Insbesondere können dabei auch weitere Anordnungsmerkmale der auf der Sensor-Zeile 11 erzeugten Lichtpunkte, die durch eine Kombination der durch erstes und zweites Maskenelement erzeugten Lichtpunkte gekennzeichnet sind, zur Bestimmung der Verschiebungen verwendet werden.

In Figur 4b wird ein weiteres Beispiel für ein erstes und ein zweites Maskenelement 17,18, die nun nebeneinander auf einer gemeinsamen Maske 12 realisiert sind, veranschaulicht.

Das erste Maskenelement 17 weist vier nebeneinander angeordnete Dreiecke und somit wieder in gewisser Weise ein V-Form auf. Die Lage des Intensitätsmittelpunkts der durch die Dreiecke entstehenden Beleuchtungszonen auf der Sensor-Zeile kann dabei eindeutig zur Bestimmung der x-Verschiebung und das Verhältnis der Breite der Beleuchtungszonen zum Abstand der Beleuchtungszonen kann zur eindeutigen und von Verschiebungen in x- und z-Richtung unabhängigen Bestimmen der y-Verschiebung verwendet werden. Das erste Maskenelement 17 ist somit zur Bestimmung von lateralen Verschiebungen optimiert.

Das zweite Maskenelement 18 ist gemäss der Ausführung in Figur 4a ausgebildet und somit zur Bestimmung von z-Verschiebungen ausgelegt.

Die beiden durch die nebeneinander liegenden Maskenelemente 17,18 erzeugten Teilprojektionen werden nun räumlich getrennt - nämlich nebeneinander liegend - auf die Sensor-Zeile abgebildet. Somit können diese Teilprojektionen separat und voneinander unterscheidbar ausgelesen werden.

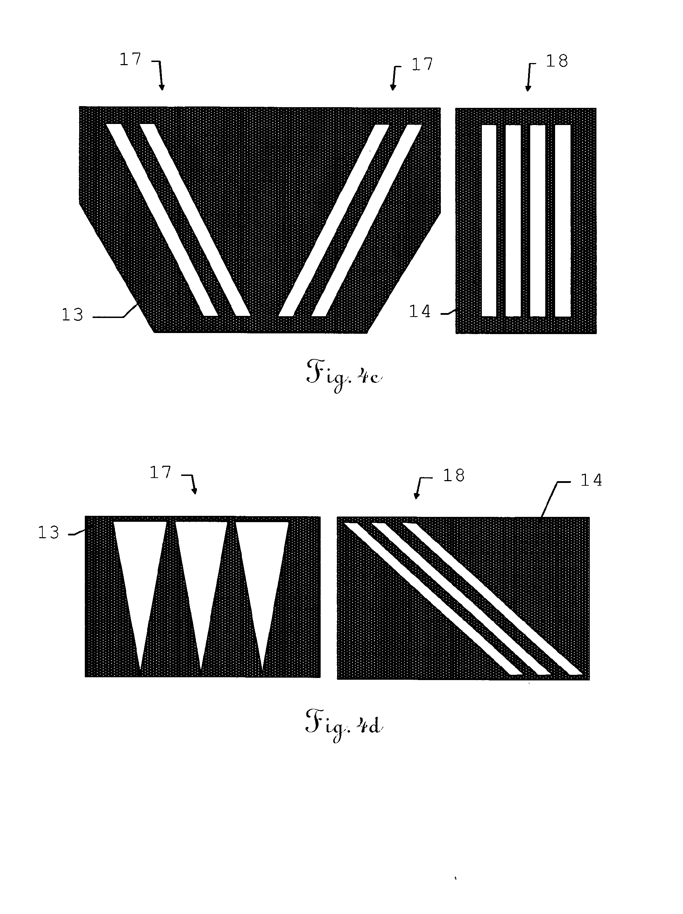

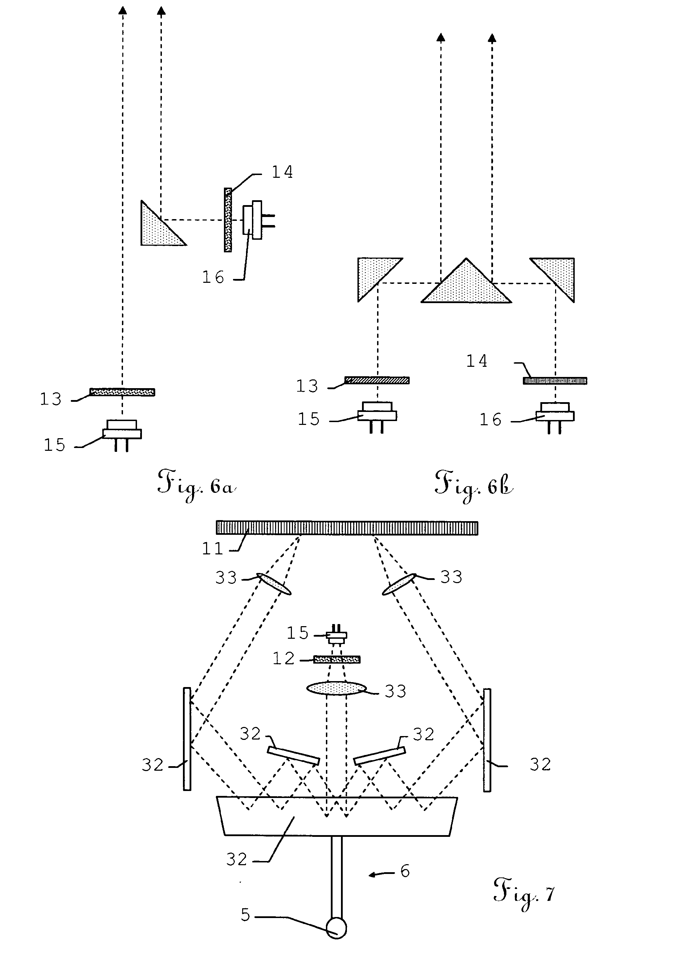

In Figur 4c sind die Figur 4a entsprechenden beiden Maskenelemente 17,18 auf zwei separaten Masken 13,14 realisiert. Die separaten Masken 13,14 können nun - wie beispielsweise in den Figuren 2b, 6a oder 6b dargestellt - von zwei separaten Quellen beleuchtet werden sowie deren Teilprojektionen entweder nebeneinander, ineinander oder zeitlich versetzt zusammengeführt und auf der Sensor-Zeile abgebildet werden.

In Figur 4d sind die ähnlich Figur 4c ausgebildeten beiden Maskenelemente 17,18 auf zwei separaten Masken 13,14 realisiert. Insbesondere ist das zweite Maskenelement 18 dabei zur Anbringung an einem Bewegungsabschnitt, welcher nur y- und z-Verschiebungen mit dem Tastelement zusammen ausführt, was z.B. der Ausführungsform aus Figur 2b entspricht, vorgesehen. Da eine durch eine x-Verschiebung bewirkte Änderung der durch das zweite Maskenelement 18 erzeugten zweiten Teilprojektion somit von vornherein auszuschliessen ist, kann bei dieser Ausführung des zweiten Maskenelements 18 eine y-Verschiebung anhand einer Bewegung der zweiten Teilprojektion entlang der Sensor-Zeile mit hoher Auflösung bestimmt werden. Nach wie vor können dabei ebenso z-Verschiebungen anhand von Skalierungsänderungen der zweiten Teilprojektion 18 auf der Sensor-Zeile ermittelt werden.

Das in diesem Ausführungsbeispiel gezeigte zweite Maskenelement 18 ist also zur Bestimmung der z- und der y-Verschiebung optimiert.

Da das erste Maskenelement 17, wie bereits in der Beschreibung zu Figur 4b erwähnt, zur Ermittlung von lateralen Verschiebungen optimiert ist, kann eine Mittelung der anhand der ersten Teilprojektion und der anhand der zweiten Teilprojektion bestimmten y-Verschiebungswerten erfolgen und somit eine y-Verschiebung genauer bestimmt werden.

Figuren 6a und 6b zeigen zwei Ausführungsbeispiele zum nebeneinander angeordneten Zusammenführen der durch zwei separate Masken 13,14 erzeugten ersten und zweiten Teilprojektion.

In Figur 6a ist ein zur Figur 2b alternatives Beispiel dargestellt. Dabei werden die beiden Teilprojektionen nun nicht zeitlich getrennt, sonder nebeneinander zusammengeführt, sodass diese nebeneinander auf der einen Sensor-Zeile abgebildet werden.

Figur 6b zeigt ein Beispiel für ein Zusammenführen von zwei durch auf separaten Masken 13,14 realisierte Maskenelemente erzeugten, nebeneinander liegenden Teilprojektionen, wobei beide Strahlungsquellen 15,16 und Masken 13,14 an dem Tastelement fix angebracht sind. Dadurch bewirken Auslenkungen des kontaktierenden Teils am Tastelement in jeder Raumrichtung x, y, z jeweils eine Änderung beider Teilprojektionen.

In Figur 7 ist ein Ausführungsbeispiel gezeigt, bei welchem die durch die Strahlungsquelle 15 und die ein erstes und ein zweites Maskenelement aufweisende Maske 12 erzeugten Teilprojektionen über reflektierende Elemente 32 vergrössert und durch zusätzliche Linsen 33 scharf auf der Sensor-Zeile 11 abgebildet werden.

Insbesondere kann dabei das als Taststift ausgebildete Tastelement 6 auch kippbar gegenüber der Messkopfbasis aufgehängt sein, sodass das Tastelement 6 beim Abtasten eines Messobjekts gekippt wird. Durch ein solches Verkippen erfährt der kontaktierende Teil 5, d.h. der das Messobjekt berührende Teil des Tastelements 6, dennoch translatorische Verschiebungen in eine x-, eine y- bzw. eine z-Richtung. Erfindungsgemäss können nun eine erste und zweite Teilprojektion auf der Sensor-Zeile erzeugt werden, sodass nun auch durch Verkippen des Tastelements 6 bewirkte Änderungen der beiden auf der Sensor-Zeile erzeugten Teilprojektionen derart ausgelesen werden, dass daraus die x-, die y- und die z-Verschiebung des kontaktierenden Teils 5 relativ zur Messkopfbasis bestimmt werden.

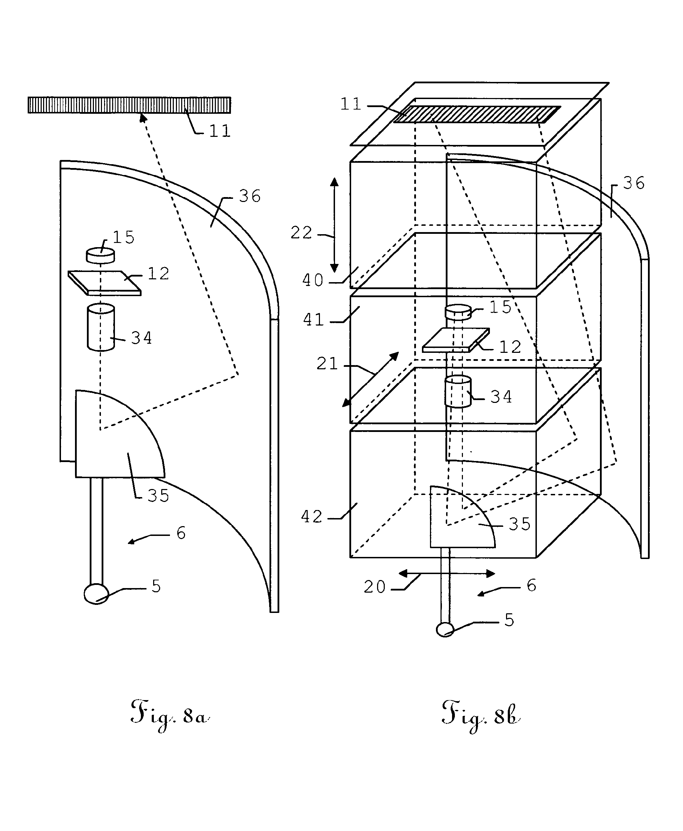

Figuren 8a und 8b zeigen - zur verständlicheren Darstellung einmal ohne und einmal mit Bewegungsabschnitte 40,41,42 des Messkopfsystems 1 - ein weiteres Ausführungsbeispiel für die Erzeugung der Teilprojektionen auf der Sensor-Zeile 11. Diese Variante sieht vor, dass die Strahlungsquelle 15 Licht in die negative z-Richtung 22 auf einen Paraboloidspiegel 35 aussendet. Dieser ist am Tastelement 6 fixiert und führt somit sämtliche Tastelementauslenkungen mit aus. Im Strahlgang befinden sich die Maske 12 mit erfindungsgemäss zwei unterschiedlichen Maskenelementen und eine vergrössernde Optik 34. Der Lichtstrahl wird nun an der Spiegeloberfläche des Paraboloids 35 reflektiert und zur Seite abgelenkt. Um die Abbildung auf die Sensor-Zeile 11 zu projizieren, ist ausserhalb der Bewegungsabschnitte 40,41,42 ein Zylinderhohlspiegel 36 angeordnet, sodass die Teilprojektionen auf der Sensor-Zeile 11 abgebildet werden.

Bei diesem Aufbau sind nun die Strahlungsquelle 15, die vergrössernde Optik 34, die Maske 12 und der Zylinderhohlspiegel 36 fix an der Messkopfbasis angebracht. Lediglich der Paraboloidspiegel 35 ist am Tastelement 6 zur Mitausführung von dessen Bewegungen bzw. von den Bewegungen des kontaktierenden Teils 5 des Tastelements 6 angeordnet.

Insbesondere sind die Bewegungsabschnitte mindestens zur Hälfte transparent ausgebildet, sodass der Strahlgang der Teilprojektionen nicht durch die Bewegungsabschnitte 40,41,42 unterbrochen oder negativ beeinflusst wird.

Es versteht sich, dass diese dargestellten Figuren nur Beispiele möglicher Ausführungsformen schematisch darstellen. In den Darstellungen wurden weitere elektronische Steuer- und Versorgungsanteile sowie Montagekomponenten lediglich aus Gründen der Anschaulichkeit nicht dargestellt.

## Patentansprüche

1. Messkopfsystem (1) für eine Koordinatenmessmaschine mit
• einem Tastelement (6) mit einem zum Kontaktieren eines Messobjekts vorgesehenen Teil als kontaktierender Teil (5), der relativ zu einer fixen Messkopfbasis (2) in einer lateralen x-Richtung (20) und einer lateralen y-Richtung (21) bewegbar ist, sodass ein zu vermessendes Objekt mit dem Tastelement (6) mechanisch abtastbar ist,
• einem an der Messkopfbasis (2) fixierten, optischen Sensor (10) mit einer auslesbaren Sensor-Zeile (11) aus einer Vielzahl von fortlaufend und im Wesentlichen ununterbrochen aneinander gereihten Sensorelementen, • Mitteln, die insbesondere räumlich fix zum kontaktierenden Teil (5) angeordnet sind,
□ zur Erzeugung einer von Verschiebungen des kontaktierenden Teils (5) relativ zur Messkopfbasis (2) abhängigen Projektion (50) auf der Sensor-Zeile (11)
□ mit mindestens einer Strahlungsquelle (15,16), wobei die Mittel mindestens ein erstes Maskenelement (17) aufweisen, das derart zur Erzeugung von einer ersten Teilprojektion (51) auf der Sensor-Zeile (11) ausgebildet ist, dass die erste Teilprojektion (51) zur Bestimmung einer x- und einer y-Verschiebung in der x- bzw. y-Richtung des kontaktierenden Teils (5) relativ zur Messkopfbasis (2) optimiert ist, und
• einer Auswerteeinheit,
welche zur Bestimmung der x- und der y-Verschiebung aus nur durch die eine Sensor-Zeile (11) erzeugten Signalen ausgebildet ist.

2. Messkopfsystem (1) nach Anspruch 1, wobei der kontaktierende Teil (5) relativ zur fixen Messkopfbasis (2) zusätzlich in einer vertikalen z-Richtung (22) bewegbar ist,
**dadurch gekennzeichnet, dass**
• die Mittel ein sich vom ersten Maskenelement (17) unterscheidendes zweites Maskenelement (18) aufweisen, die derart zur Erzeugung von einer zweiten Teilprojektion (52) auf der Sensor-Zeile (11) ausgebildet sind, dass die zweite Teilprojektion (52) zur Bestimmung mindestens einer z-Verschiebung in der z-Richtung (22) des kontaktierenden Teils (5) relativ zur Messkopfbasis (2) optimiert ist, und
• die Auswerteeinheit zur Bestimmung der x-, der y-, und der z-Verschiebung aus nur durch die eine Sensor-Zeile (11) erzeugten Signalen ausgebildet ist.

3. Messkopfsystem (1) nach Anspruch 2,
**dadurch gekennzeichnet, dass**
das zweite Maskenelement (18) derart ausgebildet ist, dass
• die z-Verschiebung eine definierte Skalierungsänderung der zweiten Teilprojektion (52) auf der Sensor-Zeile (11) sowie insbesondere
• die y-Verschiebung
□ eine definierte Verhältnismässigkeitsänderung der zweiten Teilprojektion (52) auf der Sensor-Zeile (11) oder
□ eine definierte Bewegung der zweiten Teilprojektion (52) entlang der Sensor-Zeile (11) bewirken,
im Speziellen wobei das zweite Maskenelement (18) ein Muster mit parallel und schräg zur Längsachse der Sensor-Zeile angeordneten Linien aufweist.

4. Messkopfsystem (1) nach Anspruch 2 oder 3,
**dadurch gekennzeichnet, dass**
die mindestens zwei Maskenelemente (17,18) auf einer gemeinsamen Maske (12) realisiert sind.

5. Messkopfsystem (1) nach einem der Ansprüche 2 bis 4, **dadurch gekennzeichnet, dass**
• die mindestens zwei Maskenelemente (17,18) jeweils auf einer eigenen Maske (13,14) realisiert sind und
• mehrere Strahlungsquellen (15,16) oder Umlenkmittel zum Beleuchten der Masken (13,14) vorhanden sind.

6. Messkopfsystem (1) nach einem der Ansprüche 2 bis 5, **dadurch gekennzeichnet, dass**
die mindestens zwei Teilprojektionen (51,52)
• jeweils räumlich voneinander getrennt, insbesondere nebeneinander, und/oder
• jeweils zeitlich voneinander getrennt, insbesondere abwechselnd mit einer definierten Frequenz, oder
• ineinander verschränkt
auf der Sensor-Zeile (11) erzeugt werden.

7. Messkopfsystem (1) nach einem der Ansprüche 2 bis 6, **dadurch gekennzeichnet, dass**
das Messkopfsystem (1) drei
Bewegungsabschnitte (40,41,42) aufweist, wobei
• durch eine Aufhängung eines ersten Bewegungsabschnitts (40) an der Messkopfbasis (2) eine geführte Bewegung in z-Richtung (22),
• durch eine Aufhängung eines zweiten Bewegungsabschnitts (41) am ersten Bewegungsabschnitt (40) eine geführte Bewegung in y-Richtung (21) und
• durch eine Aufhängung eines insbesondere als Tastelement (5) ausgebildeten dritten Bewegungsabschnitts (42) am zweiten Bewegungsabschnitt (41) eine geführte Bewegung in x-Richtung (20)
ausführbar ist.

8. Messkopfsystem (1) nach Anspruch 7,
**dadurch gekennzeichnet, dass**
das zweite Maskenelement (18) und eine diesem zugeordnete Strahlungsquelle (16) fix am zweiten Bewegungsabschnitt (41) angebracht sind.

9. Messkopfsystem (1) nach einem der vorangehenden Ansprüche,
**dadurch gekennzeichnet, dass**
• der Sensor (10) als Zeilensensor mit der einen einzigen Sensor-Zeile (11) ausgebildet ist und
• die Längsachse der Sensor-Zeile (11) parallel zur x-Richtung (20) ausgerichtet ist.

10. Messkopfsystem (1) nach einem der vorangehenden Ansprüche,
**dadurch gekennzeichnet, dass**
das erste Maskenelement (17) derart ausgebildet ist, dass
• die x-Verschiebung eine definierte Bewegung der ersten Teilprojektion (51) entlang der Sensor-Zeile (11) und
• die y-Verschiebung eine definierte Verhältnismässigkeitsänderung der ersten Teilprojektion (51) auf der Sensor-Zeile (11) bewirken,
im Speziellen wobei das erste Maskenelement (17) ein V-förmiges Muster aufweist.

11. Messkopfsystem (1) nach einem der vorangehenden Ansprüche,
**dadurch gekennzeichnet, dass**
die Projektion (50) durch Schattenwurf erzeugt wird.

12. Messkopfsystem (1) nach einem der Ansprüche 1 bis 10, **dadurch gekennzeichnet, dass**
zusätzlich ein oder mehrere optische
Elemente (30,31,32,33,34,35,36) zur Erzeugung der Projektion (50) auf der Sensor-Zeile (11) vorhanden sind, die
• diffraktiv,
• refraktiv oder
• reflektierend,
ausgebildet sind,
insbesondere wobei eine vergrössernd und/oder verschärfend wirkende, mikroskopobjektivartige Linsenkombination (30) zur Erzeugung der Projektion (50) auf der Sensor-Zeile (11) vorhanden ist.

13. Koordinatenmessmaschine mit einem Messkopfsystem (1) nach einem der Ansprüche 1 bis 12, insbesondere wobei das Messkopfsystem (1) auf einem Gelenkarm oder einem Verschiebungsgestell der Koordinatenmessmaschine montiert ist, wobei Mittel zum Bestimmen einer relativen Raumposition des Messkopfsystems (1) vorhanden sind.

14. Verfahren zum optisch-elektronischen Messen von Verschiebungen eines zum Kontaktieren eines Messobjekts vorgesehenen Teils als kontaktierender Teil (5) von einem Tastelement (6) eines Messkopfsystems (1) für eine Koordinatenmessmaschine, wobei der kontaktierende Teil (5) mindestens in einer lateralen x-Richtung (20) und einer lateralen y-Richtung (21) bewegbar ist, sodass ein zu vermessendes Objekt mit dem Tastelement (6) mechanisch abtastbar ist,
mit den Schritten
• Erzeugen einer von Verschiebungen des kontaktierenden Teils (5) relativ zur Messkopfbasis (2) abhängigen Projektion (50) auf eine fortlaufende und im Wesentlichen ununterbrochene, insbesondere gerade, Linie,
• Auslesen der Linie, und
• Bestimmen einer x- und einer y-Verschiebung des kontaktierenden Teils (5) relativ zur Messkopfbasis (2) in der x- bzw. der y-Richtung (20,21),
wobei
• die Projektion (50) aus mindestens einer ersten, durch mindestens ein erstes Maskenelement (17) erzeugte,
Teilprojektion (51) besteht, die zur Bestimmung der x- und der y-Verschiebung optimiert ist, und
• das Bestimmen anhand des Auslesens nur der einen Linie erfolgt.

15. Verfahren nach Anspruch 14, wobei der kontaktierende Teil (5) zusätzlich in einer vertikalen z-Richtung (22) bewegbar ist,
**dadurch gekennzeichnet, dass**
• die Projektion (50) zusätzlich aus einer sich von der ersten Teilprojektion (51) unterscheidenden zweiten Teilprojektion (52) besteht, die zur Bestimmung mindestens einer z-Verschiebung des kontaktierenden Teils (5) relativ zur Messkopfbasis (2) in der z-Richtung (22) optimiert ist, und
• das Bestimmen der x-, der y- und der z-Verschiebung anhand des Auslesens nur der einen Linie erfolgt.

16. Verfahren nach Anspruch 15,
**dadurch gekennzeichnet, dass**
die zweite Teilprojektion (52) derart erzeugt wird, dass
• die z-Verschiebung eine definierte Skalierungsänderung der zweiten Teilprojektion (52) auf der Linie sowie insbesondere
• die y-Verschiebung
□ eine definierte Verhältnismässigkeitsänderung der zweiten Teilprojektion (52) auf der Linie oder
□ eine definierte Bewegung der zweiten Teilprojektion (52) entlang der Linie bewirken,
im Speziellen wobei die zweite Teilprojektion (52) ein Muster mit parallel nebeneinander äquidistant und schräg zur ausgelesenen Linie angeordneten Strichen aufweist.

17. Verfahren nach Anspruch 15 oder 16,
**dadurch gekennzeichnet, dass**
das Erzeugen der ersten und der zweiten Teilprojektion (51,52)
• räumlich voneinander getrennt, insbesondere nebeneinander, und/oder
• zeitlich voneinander getrennt, insbesondere abwechselnd mit einer definierten Frequenz, oder
• ineinander verschränkt
erfolgt.

18. Verfahren nach einem der Ansprüche 14 bis 17,
**dadurch gekennzeichnet, dass**
die erste Teilprojektion (51) derart erzeugt wird, dass
• die x-Verschiebung eine definierte Bewegung der ersten Teilprojektion (51) entlang der Linie und
• die y-Verschiebung eine definierte Verhältnismässigkeitsänderung der ersten Teilprojektion (51) auf der Linie bewirken,
im Speziellen wobei die erste Teilprojektion (51) ein V-förmiges Muster aufweist.

## Claims

1. Measuring head system (1) for a coordinate measuring machine, having
• a probe element (6) with a part which is intended to make contact with a measurement object, as a contacting part (5), and is movable in a lateral x direction (20) and a lateral y direction (21) relative to a fixed measuring head base (2), with the result that an object to be measured can be mechanically scanned using the probe element (6),
• an optical sensor (10) which is fixed to the measuring head base (2) and has a readable sensor line (11) comprising a multiplicity of sensor elements which are continuously strung together essentially without interruption,
• means which are arranged, in particular, in a spatially fixed manner with respect to the contacting part (5),
■ are intended to generate a projection (50) on the sensor line (11), which projection is dependent on displacements of the contacting part (5) relative to the measuring head base (2), and
■ have at least one radiation source (15, 16), the means having at least one first mask element (17) which is designed to generate a first partial projection (51) on the sensor line (11) in such a manner that the first partial projection (51) is optimized for determining an x displacement and a y displacement in the x and y directions of the contacting part (5) relative to the measuring head base (2), and
• an evaluation unit which is designed to determine the x and y displacements from signals generated only by the one sensor line (11).

2. Measuring head system (1) according to Claim 1, the contacting part (5) being additionally movable in a vertical z direction (22) relative to the fixed measuring head base (2),
**characterized in that**
• the means have a second mask element (18), which differs from the first mask element (17), and is designed to generate a second partial projection (52) on the sensor line (11) in such a manner that the second partial projection (52) is optimized for determining at least one z displacement in the z direction (22) of the contacting part (5) relative to the measuring head base (2), and
• the evaluation unit is designed to determine the x, y and z displacements from signals generated only by the one sensor line (11).

3. Measuring head system (1) according to Claim 2, **characterized in that**
the second mask element (18) is designed in such a manner that
• the z displacement gives rise to a defined change in the scaling of the second partial projection (52) on the sensor line (11) and, in particular,
• the y displacement gives rise to
■ a defined change in the proportionality of the second partial projection (52) on the sensor line (11) or
■ a defined movement of the second partial projection (52) along the sensor line (11), the second mask element (18) having, in particular, a pattern with lines which are arranged parallel and obliquely to the longitudinal axis of the sensor line.

4. Measuring head system (1) according to Claim 2 or 3,
**characterized in that**
the at least two mask elements (17, 18) are implemented on a common mask (12).

5. Measuring head system (1) according to one of Claims 2 to 4,
**characterized in that**
• the at least two mask elements (17, 18) are each implemented on their own mask (13, 14), and
• a plurality of radiation sources (15, 16) or deflecting means are provided for the purpose of illuminating the masks (13, 14).

6. Measuring head system (1) according to one of Claims 2 to 5,
**characterized in that**
the at least two partial projections (51, 52) are generated on the sensor line (11) such that they are
• each spatially separate from one another, in particular beside one another, and/or
• each temporally separate from one another, in particular alternately at a defined frequency, or
• interleaved in one another.

7. Measuring head system (1) according to one of Claims 2 to 6,
**characterized in that**
the measuring head system (1) has three movement sections (40, 41, 42), in which case
• a guided movement can be carried out in the z direction (22) by suspending a first movement section (40) from the measuring head base (2),
• a guided movement can be carried out in the y direction (21) by suspending a second movement section (41) from the first movement section (40), and
• a guided movement can be carried out in the x direction (20) by suspending a third movement section (42), in particular in the form of a probe element (5), from the second movement section (41).

8. Measuring head system (1) according to Claim 7, **characterized in that**
the second mask element (18) and a radiation source (16) assigned to the latter are fitted to the second movement section (41) in a fixed manner.

9. Measuring head system (1) according to one of the preceding claims,
**characterized in that**
• the sensor (10) is in the form of a line sensor having the one single sensor line (11), and
• the longitudinal axis of the sensor line (11) is oriented parallel to the x direction (20).

10. Measuring head system (1) according to one of the preceding claims,
**characterized in that**
the first mask element (17) is designed in such a manner that
• the x displacement gives rise to a defined movement of the first partial projection (51) along the sensor line (11), and
• the y displacement gives rise to a defined change in the proportionality of the first partial projection (51) on the sensor line (11),
the first mask element (17) having, in particular, a V-shaped pattern.

11. Measuring head system (1) according to one of the preceding claims,
**characterized in that**
the projection (50) is generated by casting a shadow.

12. Measuring head system (1) according to one of Claims 1 to 10,
**characterized in that**
one or more optical elements (30, 31, 32, 33, 34, 35, 36) are additionally provided for the purpose of generating the projection (50) on the sensor line (11), which elements are
• diffractive,
• refractive, or
• reflective,
a microscope-lens-type lens combination (30) which has a magnifying and/or sharpening effect being provided, in particular, for the purpose of generating the projection (50) on the sensor line (11).

13. Coordinate measuring machine having a measuring head system (1) according to one of Claims 1 to 12, the measuring head system (1) being mounted, in particular, on a joint arm or a displacement frame of the coordinate measuring machine, means for determining a relative spatial position of the measuring head system (1) being provided.

14. Method for optoelectronically measuring displacements of a part which is intended to make contact with a measurement object, as a contacting part (5) of a probe element (6) of a measuring head system (1) for a coordinate measuring machine, the contacting part (5) being movable at least in a lateral x direction (20) and a lateral y direction (21), with the result that an object to be measured can be mechanically scanned using the probe element (6),
said method having the steps of
• generating a projection (50), which is dependent on displacements of the contacting part (5) relative to the measuring head base (2), on a continuous and essentially uninterrupted line, in particular a straight line,
• reading the line, and
• determining an x displacement and a y displacement of the contacting part (5) in the x and y directions (20, 21) relative to the measuring head base (2),
• the projection (50) consisting of at least one first partial projection (51) which is generated by at least one first mask element (17) and is optimized for determining the x and y displacements, and
• the determination process being carried out by reading only the one line.

15. Method according to Claim 14, the contacting part (5) being additionally movable in a vertical z direction (22),
**characterized in that**
• the projection (50) additionally consists of a second partial projection (52) which differs from the first partial projection (51) and is optimized for determining at least one z displacement of the contacting part (5) in the z direction (22) relative to the measuring head base (2), and
• the x, y and z displacements are determined by reading only the one line.

16. Method according to Claim 15,
**characterized in that**
the second partial projection (52) is generated in such a manner that
• the z displacement gives rise to a defined change in the scaling of the second partial projection (52) on the line and, in particular,
• the y displacement gives rise to
■ a defined change in the proportionality of the second partial projection (52) on the line, or
■ a defined movement of the second partial projection (52) along the line,
the second partial projection (52) having, in particular, a pattern with strokes which are arranged beside one another in a parallel manner at equal distances and obliquely with respect to the line which has been read.

17. Method according to Claim 15 or 16, **characterized in that**
the first and second partial projections (51, 52) are generated
• spatially separate from one another, in particular beside one another, and/or
• temporally separate from one another, in particular alternately at a defined frequency, or
• interleaved in one another.

18. Method according to one of Claims 14 to 17, **characterized in that**
the first partial projection (51) is generated in such a manner that
• the x displacement gives rise to a defined movement of the first partial projection (51) along the line, and
• the y displacement gives rise to a defined change in the proportionality of the first partial projection (51) on the line,
the first partial projection (51) having, in particular, a V-shaped pattern.

## Revendications

1. Système de tête de mesure (1), pour une machine de mesure de coordonnées, comprenant :
• un élément palpeur (6), avec une partie prévue pour mise en contact avec un objet à mesurer, sous forme de partie contactante (5), déplaçable par rapport à une base de tête de mesure (2) fixe, dans une direction x latérale (20) et une direction y latérale (21), de sorte qu'un objet à mesurer puisse être palpé mécaniquement avec l'élément palpeur (6),
• un capteur (10) optique, fixé sur la base de tête de mesure (2), avec une ligne de capteur (11) pouvant être lue, composée d'une pluralité d'éléments de capteur, alignés en rangée les uns les autres de manière continue et pratiquement ininterrompue,
• des moyens, disposés en particulier de manière spatialement fixe par rapport à la partie (5) contactante,
• pour produire sur la ligne de capteur (11) une projection (50) dépendant de déplacements de la partie contactante (5) par rapport à la base de tête de mesure (2),
• avec au moins une source de rayonnement (15, 16), les moyens présentant au moins un premier élément formant masque (17), réalisé pour générer une première projection partielle (51) sur la ligne de capteur (11), de manière que la première projection partielle (51) soit optimisée pour déterminer un déplacement en x dans la direction x et un déplacement en y dans la direction y de la partie contactante (5) par rapport à la base de tête de mesure (2), et
• une unité d'évaluation,
réalisée pour déterminer le déplacement en x et le déplacement en y à partir de signaux générés uniquement par ladite ligne de capteur (11).

2. Système de tête de mesure (1) selon la revendication 1, la partie contactante (5) étant déplaçable en plus dans une direction z verticale (22) par rapport à la base de tête de mesure (2) fixe,
**caractérisé en ce que**
• les moyens présentent un deuxième élément formant masque (18), se distinguant du premier élément formant masque (17), réalisés pour produire sur la ligne de capteur (11) une deuxième projection partielle (52), de manière que la deuxième projection partielle (52) soit optimisée pour déterminer au moins un déplacement en z dans la direction z (22) de la partie contactante (5) par rapport à la base de tête de mesure (2), et
• l'unité d'évaluation est réalisée pour déterminer le déplacement en x, le déplacement en y et le déplacement en z à partir de signaux générés uniquement par ladite ligne de capteur (11).

3. Système de tête de mesure (1) selon la revendication 2,
**caractérisé en ce que**
le deuxième élément formant masque (18) est réalisé de manière que :
• le déplacement en z provoque une modification d'échelle définie de la deuxième projection partielle (52) sur la ligne de capteur (11), ainsi que, en particulier,
• le déplacement en y
• provoque une modification de proportion définie de la deuxième projection partielle (52) sur la ligne de capteur (11), ou
• provoque un déplacement défini de la deuxième projection partielle (52) le long de la ligne de capteur (11),
dans lequel spécialement le deuxième élément formant masque (18) présente un motif avec des lignes disposées parallèlement et obliquement par rapport à l'axe longitudinal de la ligne de capteur.

4. Système de tête de mesure (1) selon la revendication 2 ou 3,
**caractérisé en ce que**
les au moins deux éléments formant masque (17, 18) sont réalisés sur un masque (12) commun.

5. Système de tête de mesure (1) selon l'une des revendications 2 à 4,
**caractérisé en ce que**
• les au moins deux éléments formant masque (17, 18) sont réalisés chacun sur un masque (13, 14) spécifique, et
• plusieurs sources de rayonnement (15, 16) ou moyens de renvoi sont prévus pour éclairer les masques (13, 14).

6. Système de tête de mesure (1) selon l'une des revendications 2 à 5,
**caractérisé en ce que**
les au moins deux projections partielles (51, 52) sont générées sur la ligne de capteur (11),
• de manière chaque fois séparées les unes des autres spatialement, en particulier les unes à côté des autres, et/ou
• de manière chaque fois séparées les unes des autres temporellement, en particulier alternativement avec une fréquence définie, ou
• imbriquées les unes dans les autres.

7. Système de tête de mesure (1) selon l'une des revendications 2 à 6,
**caractérisé en ce que**
le système de tête de mesure (1) présente trois tronçons de déplacement (40, 41, 42), sachant que,
• par un accrochage d'un premier tronçon de déplacement (40) sur la base de tête de mesure (2), il est possible de réaliser un déplacement guidé dans la direction z (22),
• par un accrochage d'un deuxième tronçon de déplacement (41) sur le premier tronçon de déplacement (40), il est possible de réaliser un déplacement guidé dans la direction y (21),
• par un accrochage d'un troisième tronçon de déplacement (42), réalisé en particulier sous forme d'élément palpeur (5), sur le deuxième tronçon de déplacement (41), il est possible de réaliser un déplacement guidé dans la direction x (20).

8. Système de tête de mesure (1) selon la revendication 7,
**caractérisé en ce que**
le deuxième élément formant maque (18) et une source de rayonnement (16), associée à celui-ci, sont montés de manière fixe sur le deuxième tronçon de déplacement (41).

9. Système de tête de mesure (1) selon l'une des revendications précédentes,
**caractérisé en ce que**
• le capteur (10) est réalisé sous forme de capteur à ligne, avec ladite ligne de capteur (11) unique, et
• l'axe longitudinal de la ligne de capteur (11) est orienté parallèlement à la direction x (20).

10. Système de tête de mesure (1) selon l'une des revendications précédentes,
**caractérisé en ce que**
le premier élément formant masque (17) est réalisé de manière que :
• le déplacement en x provoque un déplacement défini de la première projection partielle (51) le long de la ligne de capteur (11), et
• le déplacement en y provoque une modification de proportion définie de la première projection partielle (51) sur la ligne de capteur (11),
spécialement dans lequel le premier élément formant masque (17) présente un motif en forme de V.

11. Système de tête de mesure (1) selon l'une des revendications précédentes,
**caractérisé en ce que**
la projection (50) est générée par ombre portée.

12. Système de tête de mesure (1) selon l'une des revendications 1 à 10, **caractérisé en ce que**,
en plus, un ou plusieurs éléments optiques (30,31,32,33,34,35,36), de nature
• diffractive,
• réfractive, ou
• réfléchissante,
sont prévus pour générer la projection (50) sur la ligne de capteur (11),
dans lequel en particulier une combinaison de lentilles (30), à effet grossissant et/ou augmentant la netteté, du genre d'un objectif de microscope, est prévue pour générer la projection (50) sur la ligne de capteur (11).

13. Machine de mesure de cordonnées équipée d'un système de tête de mesure (1) selon l'une des revendications 1 à 12, en particulier dans lequel le système de tête de mesure (1) est monté sur un bras articulé ou un bâti de déplacement de la machine de mesure de cordonnées, des moyens étant revus pour déterminer une position spatiale relative du système de tête de mesure (1).

14. Procédé de mesure opto-électronique de déplacements d'une partie, prévue pour entrer en contact avec un objet à mesurer, réalisée sous forme de partie contactante (5) d'un élément palpeur (6) d'un système de tête de mesure (1) pour une machine de mesure de cordonnées, la partie contactante (5) étant déplaçable au moins dans une direction x latérale (20) et une direction y latérale (21), de manière qu'un objet à mesurer puisse être palpé mécaniquement avec l'élément palpeur (6),
comprenant les étapes consistant à :
• générer une projection (50), dépendant de déplacements de la partie contactante (5) par rapport à une base de tête de mesure (2), sur une ligne continue et pratiquement ininterrompue, en particulier droite,
• lire la ligne,
• déterminer un déplacement en x et un déplacement en y de la partie contactante (5) par rapport à la base de tête de mesure (2), dans la direction x respectivement dans la direction y (20, 21),
où
• la projection (50) est composée d'au moins une première projection partielle (51), générée par au moins un premier élément formant masque (17), optimisée pour déterminer le déplacement en x et le déplacement en y,
• la détermination s'effectuant à l'aide de la lecture seulement de ladite ligne unique.

15. Procédé selon la revendication 14, la partie contactante (5) étant déplaçable en plus dans une direction z verticale (22),
**caractérisé en ce que**
• la projection (50) et en plus composée d'une deuxième projection partielle (52), se distinguant de la première projection partielle (51), optimisée pour déterminer au moins un déplacement en z de la partie contactante (5) par rapport à la base de tête de mesure (2), dans la diection z (22),
• la détermination du déplacement en x, en y et en z s'effectue à l'aide de la lecture de seulement ladite ligne.

16. Procédé selon la revendication 15,
**caractérisé en ce que**
la deuxième projection partielle (52) est générée de manière que :
• le déplacement en z provoque une modification d'échelle définie de la deuxième projection partielle (52) sur la ligne, ainsi que, en particulier,
• le déplacement en y
• provoque une modification de proportion définie de la deuxième projection partielle (52) sur la ligne, ou
• provoque un déplacement défini de la deuxième projection partielle (52) le long de la ligne,
dans lequel spécialement la deuxième projection partielle (52) présente un motif avec des traits disposés parallèlement, équidistants les uns à côté des autres, et obliquement par rapport à la ligne lue.

17. Procédé selon la revendication 15 ou 16,
**caractérisé en ce que**
la génération de la première et de la deuxième projection partielle (51, 52) s'effectue
• de manière séparée l'une de l'autre spatialement, en particulier les unes à côté des autres, et/ou
• de manière séparée l'une de l'autre temporellement, en particulier alternativement avec une fréquence définie, ou
• imbriquées l'une dans l'autre.

18. Procédé selon l'une des revendications 14 à 17,
**caractérisé en ce que**
la première projection partielle (51) est générée de manière que
• le déplacement en x provoque un déplacement défini de la première projection partielle (51) le long de la ligne, et
• le déplacement en y provoque une modification de proportion définie de la première projection partielle (51) sur la ligne,
spécialement dans lequel la première projection partielle (51) présente un motif en forme de V.
